# EUROPEAN PATENT SPECIFICATION

(11) **EP 2 281 455 B1**
(45) Date of publication and mention of the grant of the patent: **22.07.2015**
(21) Application number: 10166487.8
(22) Date of filing: 18.06.2010
(51) Int. Cl.: A01N 3/00, A23B 7/152, A23B 9/22

(54) **Treatment of produce by exposing it to ethylene and cyclopropene**
Produktbehandlung durch Einwirkung von Ethylen und Cyclopropen
Traitement de marchandises par exposition à l'éthylène et au cyclopropène

(30) Priority: 14.07.2009 EP 09425281
(43) Date of publication of application: 09.02.2011
(73) Proprietor: Rohm and Haas Company, Philadelphia, Pennsylvania 19106-2399 (US)
(72) Inventor: Regiroli, Giovanni, 20026 Novate - MI (IT)
(74) Representative: Houghton, Mark Phillip

(56) References cited:
- EP-A1- 1 680 960
- WO-A1-2009/010981
- WO-A2-2008/002194
- US-A- 5 100 462
- XUQIAO FENG ET AL: 'Control of ethylene responses in avocado fruit with 1-methylcyclopropene' POSTHARVEST BIOLOGY AND TECHNOLOGY vol. 20, no. 2, 01 September 2000, pages 143 - 150, XP055028131 DOI: 10.1016/S0925-5214(00)00126-5 ISSN: 0925-5214
- LUIZ C. ARGENTA ET AL: 'Influence of 1-methylcyclopropene on Ripening, Storage Life, and Volatile Production by d'Anjou cv. Pear Fruit' JOURNAL OF AGRICULTURAL AND FOOD CHEMISTRY vol. 51, no. 13, 01 June 2003, pages 3858 - 3864, XP055028132 DOI: 10.1021/jf034028g ISSN: 0021-8561
- JOÃO PAULO FABI ET AL: 'Papaya Fruit Ripening: Response to Ethylene and 1-Methylcyclopropene (1-MCP)' JOURNAL OF AGRICULTURAL AND FOOD CHEMISTRY vol. 55, no. 15, 01 July 2007, pages 6118 - 6123, XP055041997 DOI: 10.1021/jf070903c ISSN: 0021-8561

## Description

### BACKGROUND:

The present invention relates to the treatment and storage of produce.

US 2006/0160704 describes methods of contacting plants with a cyclopropene compound and with a plant growth regulator that is not a cyclopropene compound. One plant growth regulator that is not a cyclopropene that is disclosed by US 2006/0160704 is ethylene. The methods of US 2006/0160704 pertain to the treatment of plants and are disclosed to be useful at improving the yield of the crop obtained from the treated plants. The methods of US 2006/0160704 do not address the problem of how to treat harvested produce in order to improve its response to storage conditions.

In particular, it is desired to provide a method of treating produce that addresses the problem of produce that over-reacts to post-harvest exposure to a cyclopropene compound. Such produce, after receiving post-harvest exposure to a cyclopropene compound, resists deterioration but has difficulty in developing desirable-for-consumption characteristics when removed from non-ambient storage and placed in ambient conditions.

### STATEMENT OF THE INVENTION:

The present invention is as set out in the accompanying claims.

In one aspect of the present invention, there is provided a method of treating a harvested produce for development of desirable-for-consumption characteristics, said method comprising the step of exposing said produce to an atmosphere containing (i) 100 ppb to 5,000 ppb by volume of one or more cyclopropene compound, and (ii) exogenous ethylene, wherein the ratio of ethylene concentration by volume to cyclopropene concentration by volume is from 0.1:1 to 8:1, and wherein said produce comprises one or more pear, one or more papaya, one or more avocado, or a mixture thereof, and wherein said cyclopropene compound is a compound with the formula 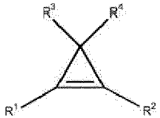 wherein R¹ is methyl, and each of R², R³ and R⁴ are hydrogen.

### DETAILED DESCRIPTION:

The present invention involves the use of methylenecyclopropene, that is a compound with the formula 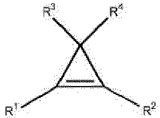
where R¹ is methyl and each of R²
R³, and R⁴ is hydrogen, and the cyclopropene compound is known herein as "1-MCP."

The practice of the present invention involves the handling of produce. As used herein, "produce" is one or more edible harvested fruit selected from pears, avocados, and papayas. In some embodiments, produce includes pears. In some embodiments, produce includes pears selected from one or more of Conference pears, Williams/Bartlett pears, and Packam's pears.

Some produce is harvested while at a stage of maturity in which it is hard enough to allow it to be easily handled without damage. In many cases, produce of such hardness is too hard to be desirable to consumers. Additionally, some of such produce that is too hard to be desirable to consumers also lacks other desirable-for-consumption characteristics such as, for example, sweetness, flavor, color, or any combination thereof.

For example, pears are often harvested at a hardness (as measured using a commercial penetrometer with a probe of 8mm diameter) of 5 to 9 kilograms of force (kgf). When pears are harvested at the stage of maturity that results in such hardness, the pears normally do not have the softness, flavor, or texture that are needed for the pears to appeal to consumers.

The quantitative hardness that is optimum for consumption of pears varies with the variety and is also a matter of preference that varies among groups of consumers around the world. For example, to be desirable for consumption, the hardness of pears is usually approximately 1.5 to 3. 5 kgf.

As used herein, "hardness" and "firmness" are synonymous. "Soften" herein means reduction of hardness.

"Ambient" conditions as used herein means temperature of 15°C to 25°C, relative humidity of 20% to 95%, and atmosphere of normal composition. Many types of produce benefit from storage at non-ambient conditions. That is, a particular type of produce may be stored under conditions that deviate from ambient conditions in one or more ways, where the particular conditions for non-ambient storage will normally be chosen to provide good conditions for storing that particular type of produce.

In cases where produce is placed in non-ambient storage, the usual reason is that that type of produce receives one or more benefits from such storage. For example, non-ambient storage may prevent or retard deterioration of the produce, or non-ambient storage may be required to allow the produce to ripen properly, or both. For example, when some varieties of pears are harvested at the stage of maturity at which they are normally picked by commercial growers (i.e., in the hardness range discussed herein above), those pears normally will not ripen properly unless they are exposed to a period of storage at temperatures well below ambient temperatures. Pears are often stored at temperature near -0.5°C (i.e., between -1.0°C and 0.5°C ). Storage condition for pears may, in addition to low temperature, have relative humidity of between 80% and 98%. Storage conditions for pears may, in addition to low temperature and, optionally, controlled humidity, also have atmospheric composition that is different from normal. For example, pears may be stored in an atmosphere that has controlled oxygen level (e.g., 1% to 3%, by volume based on the volume of the atmosphere), or has controlled carbon dioxide level (e.g., 0.5% to 2%, by volume based on the volume of the atmosphere), or has both controlled oxygen level and controlled carbon dioxide level. Pears that have been stored at low temperature will generally ripen normally when removed from storage and returned to ambient conditions.

"Deterioration" as used herein refers to any or all of over-ripening, senescence, bruising or the occurrence of one or more physiological disorders or diseases, or any combination thereof.

Produce is vulnerable to deterioration. Deterioration may take place during non-ambient storage or during exposure to ambient conditions or both.

For example, pears are vulnerable to bruising, to one or more physiological disorder or disease, and to combinations thereof. The physiological disorders and diseases to which pears are vulnerable include, for example, storage and senescent scald, core or internal breakdown, rot, decay, internal browning, mold, other disorders, and combinations thereof. In some cases, storage scald appears during exposure to ambient conditions after a period of non-ambient storage. Core breakdown can appear during non-ambient storage or during exposure to ambient conditions or both. Any one or more of bruising, rot, or internal browning can sometimes appear in pears during exposure to ambient conditions after a period of non-ambient storage.

Some types of produce, after a period of non-ambient storage, when exposed to ambient conditions, become over-ripe more quickly than is desirable. For example, such produce may, in a time period too short to effectively transport and market the produce, become too soft or too deteriorated or both to be desirable to consumers.

Among the types of produce that are vulnerable to deterioration, some types respond in a desirable way when exposed to a cyclopropene compound. For example, a cyclopropene compound may be introduced into the atmosphere of an ambient or a non-ambient storage container soon after the harvest. After the cyclopropene compound resides in the atmosphere of the storage container for a time, the atmosphere of the container may or may not be ventilated to remove the cyclopropene compound. Produce that responds in a desirable way will, after exposure to the cyclopropene compound, have no deterioration at all or will have delayed deterioration or will have less deterioration than the deterioration that would normally have happened if the produce had been handled under the same conditions without exposure to cyclopropene compound.

When produce has been harvested, exposed to cyclopropene compound, and stored at non-ambient conditions, it is desirable that the produce, when removed from non-ambient storage and placed in ambient conditions, develop characteristics that are desirable for consumption. That is, it is desirable that the produce, when placed in ambient conditions, soften or develop one or more other desirable-for-consumption characteristics or a combination thereof. Some produce spontaneously develops these desirable-for-consumption characteristics without further treatment; they are placed in ambient conditions and the desirable-for-consumption characteristics develop in a reasonable time.

Some types of produce are harvested in a condition that is both easy to handle and desirable for consumption. The goal in handling (including, for example, packing, transporting, displaying, etc.) such produce is to maintain the characteristics that make it desirable for consumption.

In the practice of the present invention, it is useful to define "over-reactive to cyclopropene." Over-reactive to cyclopropene produce, as defined herein, has all of the following characteristics: (1) it is harvested while at a stage of maturity in which it is hard enough to allow it to be easily handled without damage and stored, and that hardness makes it undesirable for consumption; (2) it is vulnerable (in the absence of post-harvest exposure to a cyclopropene compound) to deterioration during non-ambient storage or during exposure to ambient conditions or both; (3) there can be found at least one cyclopropene compound such that, after the produce is exposed after harvest to that cyclopropene compound, the produce resists one or more types of deterioration; and (4) the produce fails to develop desirable-for-consumption characteristics after these procedures: (a) receiving post-harvest exposure to one or more cyclopropene compound identified in characteristic (3), (b) then spending time in non-ambient storage, (c) being removed from non-ambient storage, and (d) then being placed in ambient conditions for a reasonable time.

In some embodiments of the present invention, produce is used that is over-reactive to cyclopropene. Produce that is over-reactive when the cyclopropene compound is 1-MCP is known herein as produce that is over-reactive to 1-MCP. In some embodiments of the present invention, produce is used that is over-reactive to 1-MCP.

In some embodiments, when over-reactive produce is removed from non-ambient storage and placed in ambient conditions, after a reasonable time it remains hard or fails to develop other desirable-for-consumption characteristics or a combination thereof. For many types of produce, including, for example, pears, a reasonable time in which to expect development of desirable-for-consumption characteristics at ambient conditions is 14 days or less or, in some cases, 7 days or less.

Some types of over-reactive produce are pears. Some varieties of pear are more over-reactive than others. That is, when pears are harvested as described herein above, exposed to cyclopropene compound, stored at non-ambient conditions, then removed from non-ambient storage and placed in ambient conditions, after 7 days at ambient conditions, some varieties of pear will have softened to some extent, while other varieties of pear will have softened to a smaller extent, and some varieties will not have softened at all. Some varieties of pear that soften under ambient conditions may, in some circumstances, not meet the criteria as defined herein for over-reactive to cyclopropene. Some varieties of pear that are normally observed to be over-reactive to cyclopropene are Conference, Williams/Bartlett, and Packam's.

As used herein, "ppb" refers to the concentration of a compound in an atmosphere, in parts per billion of that compound by volume, based on the volume of the atmosphere.

The practice of the present invention involves exposing produce to an atmosphere that contains methylenecyclopropene. In some embodiments, the concentration of methylenecyclopropene in the atmosphere is 100 ppb or more, or 250 ppb or more, or 500 ppb or more. Independently, in some embodiments, the concentration of methylenecyclopropene is 5,000 ppb or less, or 2,000 ppb or less, or 1,000 ppb or less. In some embodiments, the concentration of methylenecyclopropene compound is 250 to 1,000 ppb.

Exposing produce to atmosphere containing methylenecyclopropene compound may be accomplished by any method. For example, one suitable method is to place produce in an airtight container and then introduce one or more cyclopropene compound into the atmosphere of that airtight container. Methylenecyclopropene may be introduced into the atmosphere of such a container by any method. For example, cyclopropene compounds may be injected as a gas from an external container into the airtight container. For another example, a sealed vial that contains methylenecyclopropene, 1-MCP, and that is smaller than the airtight container could be placed into the airtight container, and then the sealed vial could be unsealed. For another example, 1-MCP could be contained within a molecular encapsulating complex, the complex could be placed inside the airtight container, and the 1-MCP could then be released from the complex, for example by contacting the complex with water. For another example, cyclopropene in molecular encapsulating complex could be placed in a relatively small vessel with some water and the small vessel could be sealed; the small vessel could be placed into an airtight container with produce and the small vessel could then be opened, releasing methylenecyclopropene.

Also envisioned are methods in which a container that contains the 1-MCP is placed in an airtight container, and then the container that contains 1-MCP is opened while the airtight container is not completely sealed (for example, while an operator reaches through a small opening in the airtight container in order to open a vial containing cyclopropene compound). In such methods the airtight container would be sealed very soon after the container that contains the methylenecyclopropene was opened. Experiments have demonstrated that when such methods are practiced, the produce that is exposed to cyclopropene compounds and not to ethylene behave in the same way as produce exposed identically but without any openings in the airtight container. Such experiments have demonstrated that the loss of cyclopropene compound is not important in methods involving the small opening in the airtight container.

Exposing produce to atmosphere containing methylenecyclopropene may be accomplished under any conditions. In some embodiments, the exposing is done under ambient conditions. In some embodiments, the exposing is done under non-ambient conditions. In some embodiments, the exposing is done at the same temperature at which the produce will be held during subsequent non-ambient storage. In some embodiments, the exposing is done at the same non-ambient conditions at which the produce will be held during subsequent non-ambient storage.

Exposure of produce to atmosphere containing methylenecyclopropene compound may be for any duration. In some embodiments, the duration is 4 hours or more; or 8 hours or more; or 16 hours or more. Independently, in some embodiments, the duration is 50 hours or less; or 36 hours or less. In some embodiments, the duration is 16 to 36 hours.

The practice of the present invention involves exposing produce to an atmosphere that contains ethylene. Exposing produce to atmosphere containing ethylene may be accomplished by any method. For example, one suitable method is to place produce in an airtight container and then introduce ethylene into the atmosphere of that airtight container. Ethylene may be introduced into the atmosphere of such a container by any method. For example, ethylene may be injected as a gas from an external container into the airtight container. For another example, a sealed vial that contains ethylene and that is smaller than the airtight container could be placed into the airtight container, and then the sealed vial could be unsealed. For another example, ethylene may be directly produced inside the airtight container, for example by catalytic reaction from ethanol.

Exposing produce to atmosphere containing ethylene may be accomplished under any conditions. In some embodiments, the exposing is done under ambient conditions. In some embodiments, the exposing is done under non-ambient conditions. In some embodiments, the exposing is done at the same temperature at which the produce will be held during subsequent non-ambient storage. In some embodiments, the exposing is done at the same non-ambient conditions at which the produce will be held during subsequent non-ambient storage.

Exposure of produce to atmosphere containing ethylene may be for any duration. In some embodiments, the duration is 4 hours or more; or 8 hours or more; or 16 hours or more. Independently, in some embodiments, the duration is 50 hours or less; or 36 hours or less. In some embodiments, the duration is 16 to 36 hours.

In the practice of the present invention, produce is exposed to an atmosphere that contains both ethylene and methylenecyclopropene. The period of time over which the produce is exposed to atmosphere that contains ethylene (the "ethylene time") may or may not be identical to the period of time over which the produce is exposed to atmosphere that contains methylenecyclopropene (the "cyclopropene time"). If the ethylene time and the methylenecyclopropene time are not identical, they will overlap. In some embodiments, the extent of the cyclopropene time during which the atmosphere to which the produce is exposed also contains ethylene is, based on the methylenecyclopropene time, 50% or more; or 70% or more; or 90% or more. Independently, in some embodiments, the extent of the ethylene time during which the atmosphere to which the produce is exposed also contains methylenecyclopropene is, based on the ethylene time, 50% or more; or 70% or more; or 90% or more.

In some embodiments, the extent of the methylenecyclopropene time during which the atmosphere to which the produce is exposed also contains ethylene is, based on the cyclopropene time, 90% or more, and the extent of the ethylene time during which the atmosphere to which the produce is exposed also contains methylenecyclopropene is, based on the ethylene time, 90% or more.

During periods of time in which produce is exposed to atmosphere that contains both ethylene and methylenecyclopropene, the amount of ethylene in the atmosphere may be characterized by the ratio of ethylene concentration to the methylenecyclopropene concentration (herein called "active ratio"). For an ethylene concentration of X ppm by volume in the atmosphere and a methylenecyclopropene concentration of Y ppm by volume in the atmosphere, the active ratio is Q:1, where Q is the number obtained by dividing X by Y. As used herein, if the active ratio is said to be L:1 or higher (or "L:1 or lower"), it is meant that the active ratio is M:1, where M is equal to or greater than L (or equal to or less than L).

In the practice of the present invention, the active ratio is from 0.1:1 to 8:1. In some embodiments, the active ratio is 0.2:1 or higher; or 0.4:1 or higher. Independently, in some embodiments, the active ratio is 4:1 or lower; or 2:1 or lower. In some embodiments, the active ratio is from 0.4:1 to 2:1.

In some embodiments, exposing produce to atmosphere containing ethylene and methylenecyclopropene is accomplished at temperature from -1.5°C to 25°C. In some embodiments, that exposing is accomplished at temperature from -1.5°C to 4°C. In some embodiments, that exposing is accomplished at 15°C to 25°C.

It is useful to characterize the time that elapses after harvest before the produce is exposed to atmosphere containing ethylene and methylenecyclopropene.

In some embodiments, that delay is 0 days (i.e., the produce is exposed to atmosphere containing ethylene and methylenecyclopropene after harvest on the same day as that produce is harvested) or more, and 8 days or less. In some embodiments, that delay is 0 to 7 days, or 0 to 5 days.

The ethylene discussed herein is exogenous ethylene (i.e., ethylene that is artificially introduced into the atmosphere around the produce). That is, for purposes of practicing the present invention, any ethylene made by the produce itself is not considered part of the ethylene that is used in the "treatment" of the produce. The amounts and timing of the presence of ethylene refers to the amounts and timing of bringing ethylene from sources other than the produce itself into contact with the produce.

In some embodiments, produce is introduced after harvest into an airtight chamber, and non-ambient temperature and, optionally, humidity conditions are established. In some of such embodiments, exposure to atmosphere containing ethylene and one or more cyclopropene compound is conducted at those temperature and humidity conditions. In some of such embodiments, exposure to atmosphere containing ethylene and methylenecyclopropene is begun within one day after introduction of the produce into the airtight chamber.

In some embodiments, after exposure to atmosphere containing ethylene and methylenecyclopropene produce is held in non-ambient storage for a time.

In some embodiments, after the produce is exposed in an airtight container to atmosphere that contained both ethylene and methylenecyclopropene, that atmosphere is removed and is replaced by the atmosphere to which the produce will be exposed during its non-ambient storage.

Among embodiments in which the produce is stored after the produce is exposed to atmosphere that contains both ethylene and 1-MCP the container in which the produce is stored may be the same as the container in which the produce was exposed to atmosphere that contains both ethylene and 1-MCP or the produce may be moved from the container into which it was exposed to atmosphere that contains both ethylene and 1-MCP and placed into a different container for storage.

The conditions of non-ambient storage are normally chosen to protect the produce from deterioration. Non-ambient storage is often performed at temperature below ambient temperature. In some embodiments, pears that have been exposed to effective -MCP are suitably stored at low temperature, for example at -1°C to 4°C or at -1°C to 2°C. In some embodiments, non-ambient storage involves both low temperature and the control of the relative humidity. For example, pears are normally stored at low temperature and at relative humidity of 80% to 98%. For produce other than pears, it is contemplated that suitable non-ambient conditions for storage will be selected to maximize the resistance of the produce to deterioration.

In some embodiments, non-ambient storage is performed at low temperature, (optionally additionally at controlled relative humidity) and with composition of atmosphere that is the same as that of the regular ambient atmosphere. Such non-ambient storage is known herein as "regular atmosphere" or "RA" storage.

In some embodiments, non-ambient storage is performed at low temperature, (optionally additionally at controlled relative humidity) and with composition of atmosphere that is different from that of the regular ambient atmosphere. Such non-ambient storage is known herein as "controlled atmosphere" or "CA" storage. The composition of atmosphere in CA storage may have less oxygen than the regular standard atmosphere, or the composition of atmosphere in CA storage may have more carbon dioxide than the regular standard atmosphere, or the composition of atmosphere in CA storage may have less oxygen than the regular standard atmosphere and more carbon dioxide than the regular standard atmosphere.

In some embodiments, CA storage involves atmosphere composition that has 0.5% to 5% oxygen by volume. In some embodiments, CA storage involves atmosphere composition that has 2% to 2.5% oxygen by volume. Independently, in some embodiments, CA storage involves atmosphere composition that has 0.05% to 2% carbon dioxide by volume. In some embodiments, CA storage involves atmosphere composition that has 0.8% to 1% carbon dioxide by volume.

In some embodiments, conditions are kept constant throughout the non-ambient storage period. Also envisioned are embodiments in which conditions are varied, including, for example, storage in RA conditions followed by CA conditions.

Among embodiments involving non-ambient storage, the duration of non-ambient storage may be, for example, 2 weeks or more; or 1 month or more; or 2 months or more. Independently, among embodiments involving non-ambient storage, the duration of non-ambient storage may be, for example, 12 months or less; or 8 months or less. In some embodiments, RA non-ambient storage is conducted for 1 to 6 months. Independently, in some embodiments, CA non-ambient storage is conducted for 4 to 12 months.

Prior to consumption, produce is usually held at ambient conditions for a time (known herein as "shelf life"), typically during display in a market and in consumers' possession. In some embodiments, when produce is taken from non-ambient storage to ambient conditions, it has desirable-for-consumption characteristics or it develops them in fewer than 7 days, or in 2 days or fewer. Independently, in some embodiments, when produce is taken from non-ambient storage to ambient conditions, it has or develops desirable-for-consumption characteristics and maintains until a point in time 7 days or more after removal from non-ambient storage, or until a point in time 10 days or more after removal from non-ambient storage, or until a point in time 14 days or more after removal from non-ambient storage.

In some embodiments, produce that has experienced non-ambient storage is removed from non-ambient storage and is then held at ambient conditions. In some of such embodiments, produce may be held at ambient conditions for 1 day or more, or 2 days or more, or 5 days or more. Independently, in some of such embodiments, produce may be held at ambient conditions for 20 days or fewer; or 15 days or fewer. In some embodiments, produce is held at ambient conditions for 5 to 15 days.

In some embodiments of the present invention, over-reactive produce is harvested when it is hard enough to handle without damage and to store but too hard to be desirable for consumption; that produce is then exposed to atmosphere containing both ethylene and methylenecyclopropene; that produce is then given non-ambient storage; that produce is then removed from non-ambient storage and held at ambient conditions. In some of such embodiments, the produce is pears or papayas or avocados. In some of such embodiments, the produce is pears. In some of such embodiments, the produce is pears of a variety chosen from Conference pears, Williams/Bartlett pears, and Packam's pears.

In some embodiments, pears are treated; methylenecyclopropene is used at concentration of 250 to 1,000 ppm; active ratio is 0.1:1 to 8:1; overlap extent is 90% or more; and non-ambient storage is performed at -1°C to 0.5°C for one month or longer.

It is to be understood that for purposes of the present specification and claims that each operation disclosed herein other than non-ambient treatment of produce and non-ambient storage of produce is performed under ambient conditions unless other conditions are specifically described.

### EXAMPLES

### Methods:

Pears (Conference, William's/Bartlett, or Packam's) were harvested at maturity for long storage. Number of fruits and replicates were selected according to the size of the chamber in which to apply 1-MCP and according to the statistical design. Airtight containers in the range of 1 cubic meter were used for the application of both 1-MCP and ethylene. 1-MCP was released from SmartFresh^{™} powder that contained 0.14% 1-MCP by weight (obtained from AgroFresh, Inc.). The amount of that SmartFresh™ powder was chosen to yield the target atmospheric concentration of 1-MCP in the chosen container. For example, the 1-MCP released from 1000 mg of that SmartFresh^{™} powder in 1 cubic meter yielded 1-MCP concentration in the atmosphere of 625 ppb.

The chosen amount of SmartFresh™ powder was dissolved in water into a tight flask and shaken until all the powder was dissolved. The flask was then put it into the airtight container and opened, to release the 1-MCP. At the same time of the opening of the 1-MCP flask, ethylene was injected with a syringe into the airtight container. Ethylene was taken from a compressed tank at known concentration: either taken directly or released into a flask. In the latter case the concentration was measured by gas-chromatograph to determine the quantity of volume to inject into the airtight container to get the target concentration.

The exposure to atmosphere containing either 1-MCP alone or 1-MCP and ethylene was done on cold pears (already cooled down to non-ambient storage temperature) within a maximum of 7 days from harvest and lasted 24 hours. At the end of the application, the airtight container was vented for 15 minutes and the fruits were put into RA or CA storage. RA storage was at temperature of -1°C to 1°C and at relative humidity of 80% to 98%. CA storage had the same temperature and humidity of RA storage, had oxygen level of 1% to 3%, by volume based on the volume of the atmosphere and had carbon dioxide level of 0.5% to 2%, by volume based on the volume of the atmosphere.

In addition, samples of pears (from the same orchards from which pears treated with 1-MCP alone or 1-MCP and ethylene were harvested) were put into an airtight container for 24 hours at the temperature as the treated pears in order to reproduce the same environmental conditions. Then they were stored in the same rooms or in separated rooms in the same conditions of RA and CA as the treated pears. These pears received no exposure to 1-MCP, exogenous ethylene, or any combination thereof, and they are labeled "control" below.

Length of non-ambient storage at present commercial temperature and storage regime was generally of 2-4 months in RA and 6 months in CA, unless otherwise specified, according to normal commercial practice.

All pears received the same progression of non-ambient storage followed by exposure to ambient conditions ("shelf life").

Pears denoted with a single number (e.g., "300") received 1-MCP treatment with that concentration, in ppb, of 1-MCP in the atmosphere (e.g., 300 ppb) and were not exposed to exogenous ethylene. Pears denoted with two numbers (e.g. "300 + 600") were treated with both that concentration in ppb of 1-MCP and that concentration in ppb of ethylene (e.g., 300 ppb of 1-MCP and 600 ppb of ethylene). The firmness of pears was tested using commercial penetrometers with test probe of 8mm diameter. Reported quantity is "firmness" ("F"), the penetrometer force in kgf.

### Comparative Examples

Samples that are Comparative Examples are marked below with "(C)."

In each of the Examples below, the comparative examples showed the following:
- Control samples had firmness that was either the lowest firmness that a commercially useful pear could have or even below that limit (unacceptable low firmness).
- Samples exposed to 1-MCP and not to ethylene had firmness that was undesirably high.

In Examples 7, 8, and 9, pears exposed to 1-MCP alone and pears exposed to both 1-MCP and ethylene showed resistance to deterioration. It is contemplated that, in all the Examples below, whether or not tests were performed to assess deterioration, pears exposed to 1-MCP alone and pears exposed to both 1-MCP and ethylene experienced resistance to deterioration.

### Example 1: South Africa / William's Pears / RA for 8 weeks / ambient for 5 days

Firmness testing results (kgf) on pears from three farms were:

| Sample | farm 1 F | farm 2 F | farm 3 F |
|---|---|---|---|
| control(C) | 0.9 | 0.9 | 0.9 |
| 300(C) | 6.7 | 5.6 | 7.2 |
| 300+300 | 1.5 | 1.3 | 1.5 |

Each of the samples treated with both 1-MCP and ethylene had acceptable firmness that was lower than the corresponding 1-MCP-only sample and that was higher than the corresponding too low control sample.

### Example 2: South Africa / Packam's Pears / RA for 8 or 12 weeks / ambient 5 days

Firmness testing results (kgf) were:

| Sample | 8 weeks F | 12 weeks F |
|---|---|---|
| control(C ) | 1.5 | 1.2 |
| 300(C) | 6.8 | 5.8 |
| 300+300 | 2.7 | 1.5 |
| 300+600 | 4.1 | 1.4 |
| 600 | 6.5 | 6.3 |
| 600+600 | 4.8 | 2.2 |
| 600+1200 | 4.6 | 2.2 |

The pears treated with both 1-MCP and with ethylene were softer than the corresponding 1-MCP-only pears and were firmer than the corresponding control pears).

### Example 3: Europe / Conference Pears / RA 3 months / ambient 5 to 8 days

Firmness testing results (kgf) from seven farms in the Netherlands ("NL"), France ("FR"), Italy ("IT"), and Spain ("ES") were:

| Sample | NL A F | NL B F | FR A F | FR B F | ES A F | ES B F | IT F | Av⁽²⁾ F |
|---|---|---|---|---|---|---|---|---|
| control(C ) | 1.3 | 1.2 | 1.6 | 1.8 | 0.9 | 1 | 1.8 | 1.4 |
| 300(C) | 5.3 | 5.6 | 5.3 | 5.1 | 2.5 | 3.4 | 4.8 | 4.6 |
| 300+300 | 2.2 | 2.4 | 4 | 2 | 1.7 | 2.5 | 1.6 | 2.3 |
| 600(C) | 5.3 | 5.6 | 5.4 | 5.2 | 6.3 | 6.3 | 5.7 | 5.7 |
| 600+600 | 2.9 | 3 | 4.6 | 2.2 | 3.6 | 3.6 | 2 | 3.1 |

| | | | | | | | | |
|---|---|---|---|---|---|---|---|---|
| Note (2): Average of the results from the seven farms. | | | | | | | | |

Within each farm, exposure to atmosphere containing both ethylene and 1-MCP resulted in softer pears than were obtained from the corresponding 1-MCP-only treatment and at the same time comparable to (as in the case of the Italy farm) or harder than control pears.

### Example 4: Europe / Conference Pears / CA 6 months / ambient 5 to 8 days

Firmness testing results (kgf) were:

| Sample | NL A F | NL B F | FR F | ES A F | ES B F | IT F | Av^{(2a)} F |
|---|---|---|---|---|---|---|---|
| Control(C) | 1.1 | 1.2 | 1.6 | 1.1 | 1 | 1.6 | 1.3 |
| 300(C) | 4.4 | 3.4 | 4.7 | 4.2 | 3.3 | 4.7 | 4.1 |
| 300+300 | 1.5 | 1.2 | 2.2 | 2.6 | 2 | 2 | 1.9 |
| 600(C) | 5.1 | 5.7 | 5.1 | 6.1 | 5.6 | 4.9 | 5.4 |
| 600+600 | 2 | 1.7 | 2.3 | 3.8 | 2.8 | 2.8 | 2.6 |

| | | | | | | | |
|---|---|---|---|---|---|---|---|
| Note (2a): Average of the results from the six farms. | | | | | | | |

The pears treated with 1-MCP and ethylene showed desirable softening; they were softer than the corresponding 1-MCP-only pears and were comparable to or harder than the control pears.

### Example 5: Europe / Conference Pears / RA 3 months / ambient 5-8 days

Pears were tested for firmness, as described above, and were rated for color on a scale of 0 (green) to 5 (yellow). Results were as follows.

| | SW France | | Italy | |
|---|---|---|---|---|
| Sample | F | color | F | color |
| Control(C) | 1.8 | 4 | 1.8 | 3.3 |
| 300(C) | 5.1 | 2.95 | 4.8 | 1.9 |
| 300+300 | 2 | 3.65 | 1.8 | 2.4 |
| 600(C) | 5.2 | 2.95 | 5.7 | 2.1 |
| 600+600 | 2.2 | 3.65 | 2 | 2.5 |

The pears treated with both 1-MCP and ethylene had desirable firmness, either comparable to or higher than the firmness of the control pears. The pears treated with both 1-MCP and ethylene had desirable color rating, higher (i.e., less green) than the 1-MCP-only pears and lower (i.e., less yellow) than the control pears.

### Example 6: Europe / Conference Pears / CA 6 months / ambient 5-8 days

Samples were rated for firmness and color as in Example 5.

| | SW France | | Italy | | Average⁽²⁾ | |
|---|---|---|---|---|---|---|
| Sample | F | color | F | color | F | color |
| Control(C) | 1.6 | 3.9 | 1.6 | 4.9 | 1.6 | 4.4 |
| 300(C) | 4.7 | 2.7 | 4.7 | 2.4 | 4.7 | 2.6 |
| 300+300 | 2.2 | 3.3 | 2 | 2.9 | 2.1 | 3.1 |
| 600(C) | 5.1 | 2.65 | 4.9 | 3.4 | 5.0 | 3.0 |
| 600+600 | 2.3 | 3.3 | 2.8 | 2.8 | 2.6 | 3.1 |

| | | | | | | |
|---|---|---|---|---|---|---|
| Note (3): average of the two types of pears | | | | | | |

The pears treated with both 1-MCP and ethylene had desirably low firmness, higher than that of the control and lower than that of the 1-MCP-only sample. On average, the pears treated with both 1-MCP and ethylene had desirable color rating, greener than control pears and either comparable to or yellower than the 1-MCP-only pears. On average, the 1-MCP-only pears had undesirably too green color rating and the control pears had undesirably too yellow color.

### Example 7: Europe / Conference Pears / RA 4 months

After RA storage, pears were exposed to ambient for the number of days shown below and then inspected for rot, bruising, and internal browning ("I.B."). Results shown are the percentage of pears having the disorder.

| location | SW France | | | Loire, France | | |
|---|---|---|---|---|---|---|
| ambient days | 13 | 13 | 13 | 11 | 13 | 15 |
| Disease/disorder | rot | bruising | I.B. | I.B. | I.B. | I.B. |
| control(C) | 13 | 76 | 56 | 15 | 100 | nt⁽⁴⁾ |
| 300(C) | 0 | 0 | 0 | 0 | 0 | 0 |
| 300+300 | 8 | 0 | 0 | 0 | 0 | 32 |
| 600(C) | 0 | 0 | 0 | 0 | 0 | 0 |
| 600+600 | 10 | 0 | 0 | 0 | 0 | 19 |

| | | | | | | |
|---|---|---|---|---|---|---|
| Note (4): not tested because all fruit was inedible after 13 days. | | | | | | |

The pears treated with 1-MCP alone and with 1-MCP plus ethylene showed lower percentage of disorders than the control pears.

### Example 8: Europe / Conference Pears / CA 6 months / ambient 13 days

Pears from SW France were examined as in Example 7, and the percent disordered fruit was as follows:

| disorder | control(C) | 300(C) | 300+300 | 600(C) | 600+600 |
|---|---|---|---|---|---|
| rot | 45 | 12 | 16 | 13 | 15 |
| I.B. | 61 | 34 | 12 | 30 | 18 |

Samples treated with 1-MCP only and samples treated with both 1-MCP and ethylene had fewer diseased fruits that the control sample. Samples treated with both 1-MCP and ethylene had fewer fruits with I.B. than 1-MCP only samples.

### Example 9: Europe / Conference Pears / CA 6 months

Pears from Italy (the same pears whose firmness is reported herein above in Example 5) were examined for scald after exposure to ambient conditions for the number of days shown below.

| test | firmness (kgf) | | percent with scald | |
|---|---|---|---|---|
| ambient days | 0 | 7 | 0 | 7 |
| control(C) | 6.8 | 1.6 | 0 | 36 |
| 300(C) | 6.5 | 4.7 | 0 | 1 |
| 300+300 | 6.0 | 2.0 | 0 | 5 |
| 600(C) | 6.8 | 4.9 | 0 | 1 |
| 600+600 | 6.3 | 2.98 | 0 | 0 |

Samples treated with 1-MCP only and samples treated with both 1-MCP and ethylene had fewer pears with scald than the control group.

### Example 10: Europe / Conference Pears / RA 3 months / ambient 5 days

Firmness testing results (kgf) were:

| Sample | NL A | NL B | Average⁽⁵⁾. |
|---|---|---|---|
| | F | F | F |
| Control (C) | 1.79 | 1.37 | 1.58 |
| 300(C) | 5.59 | 3.37 | 4.48 |
| 600(C) | 5.65 | 5.52 | 5.58 |
| 600+300 | 5.24 | 3.89 | 4.56 |
| 600+600 | 2.85 | 2.03 | 2.44 |

| | | | |
|---|---|---|---|
| Note (5): average of the two orchards. | | | |

The pears treated with 1-MCP and ethylene show desirable softening, having firmness higher than the control pears and lower than the "600" 1-MCP-only pears, with the "600+600" 1-MCP-plus-ethylene pears having the most desirable firmness.

### Example 11: Europe / Conference Pears in Spain / RA 3 months

Firmness testing results (kgf) for Orchards #1, #2, and #3 were:

| | Orchard #1 | | | Orchard #2 | | | Orchard #3 | | |
|---|---|---|---|---|---|---|---|---|---|
| days ambient | 0 | 7 | 12 | 0 | 7 | 12 | 0 | 7 | 12 |
| | F | F | F | F | F | F | F | F | F |
| Control (C) | 5.88 | 1.01 | 0.1 | 5.90 | 0.86 | 0.1 | 6.23 | 1.43 | 0.1 |
| 300(C) | 5.72 | 5.84 | 5.55 | 5.92 | 5.53 | 5.68 | 5.97 | 5.44 | 5.62 |
| 600(C) | 5.95 | 5.95 | 5.75 | 6.07 | 6.03 | 6.17 | 6.46 | 6.30 | 6.58 |
| 600+300 | 6.00 | 2.02 | 0.97 | 6.13 | 1.45 | 0.70 | 6.05 | 2.22 | 1.39 |
| 600+600 | 5.70 | 1.33 | 0.85 | 5.91 | 0.94 | 0.78 | 6.15 | 1.51 | 1.04 |

The pears treated with 1-MCP and ethylene show desirable softening. At zero days at ambient conditions, all the pears were hard, with firmness roughly comparable to each other. At 7 and 12 days of ambient conditions, the pears treated with 1-MCP and ethylene were softer than the 1-MCP-only pears and firmer than the control pears. At 12 days of ambient conditions, the control pears are too soft to be commercially desirable, while the pears treated with 1-MCP and ethylene are still commercially desirable.

## Claims

1. A method of treating a harvested produce for development of desirable-for-consumption characteristics, said method comprising the step of exposing said produce to an atmosphere containing
(i) 100 ppb to 5,000 ppb by volume of a cyclopropene compound, and
(ii) exogenous ethylene,
wherein the ratio of ethylene concentration by volume to cyclopropene concentration by volume is from 0.1:1 to 8:1
wherein said produce comprises one or more pear, one or more papaya, one or more avocado, or a mixture thereof, and
wherein said cyclopropene compound is a compound with the formula 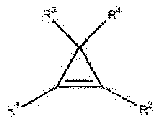 wherein R¹ is methyl, and each of R², R³ and R⁴ are hydrogen.

2. The method of claim 1, wherein said exposing is conducted at temperature of - 1.5°C to 25°C.

3. The method of claim 1, wherein said exposing is conducted at temperature of - 1.5°C to 4°C.

4. The method of claim 1, wherein said exposing is conducted at temperature of 15°C to 25°C.

5. The method of claim 1, wherein said method comprises the additional step, subsequent to said exposing, of storing said produce for 2 weeks or longer at temperature of -1.5°C to 4°C.

6. The method of claim 1, wherein said produce comprises one or more pear.

7. The method of claim 6, wherein said one or more pear is harvested at a hardness as measured by a commercial penetrometer with a probe of 8 mm diameter of 5 to 9 kilograms of force.

8. The method of claim 6, wherein said one or more pear is selected from Conference Pears, Williams/Bartlett Pears, and Packam's pears.

9. The method of claim 6, wherein said method comprises the additional step, subsequent to said exposing, of storing said produce at a temperature of -1.0°C to 0.5°C.

10. The method of claim 9, wherein said storing is performed at relative humidity of between 80% and 98%.

11. The method of claim 1, wherein the extent of the cyclopropene time, that is the period of time over which said produce is exposed to atmosphere that contains methylenecyclopropene, during which the atmosphere to which said produce is exposed also contains ethylene is 90% or more, based on the cyclopropene time, and the extent of the ethylene time, that is the period of time over which said produce is exposed to atmosphere that contains ethylene, during which the atmosphere to which said produce is exposed also contains methylenecyclopropene is 90% or more, based on the ethylene time.

## Patentansprüche

1. Ein Verfahren zum Behandeln eines geernteten Erzeugnisses zur Entwicklung von für den Verzehr wünschenswerten Eigenschaften, wobei das Verfahren den Schritt des Aussetzens des Erzeugnisses gegenüber einer Atmosphäre beinhaltet, die Folgendes enthält:
(i) 100 ppbv bis 5000 ppbv einer Cyclopropenverbindung, und
(ii) exogenes Ethylen,
wobei das Verhältnis von Ethylenvolumenkonzentration zu Cyclopropenvolumenkonzentration von 0,1 : 1 bis 8 : 1 beträgt,
wobei das Erzeugnis eine oder mehrere Birnen, eine oder mehrere Papayas, eine oder mehrere Avocados oder eine Mischung davon beinhaltet, und
wobei die Cyclopropenverbindung eine Verbindung mit der folgenden Formel ist 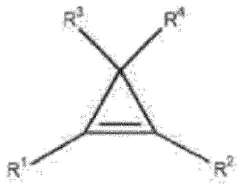 wobei R¹ Methyl ist und R², R³ und R⁴ jeweils Wasserstoff sind.

2. Verfahren gemäß Anspruch 1, wobei das Aussetzen bei einer Temperatur von -1,5 °C bis 25 °C ausgeführt wird.

3. Verfahren gemäß Anspruch 1, wobei das Aussetzen bei einer Temperatur von -1,5 °C bis 4 °C ausgeführt wird.

4. Verfahren gemäß Anspruch 1, wobei das Aussetzen bei einer Temperatur von 15 °C bis 25 °C ausgeführt wird.

5. Verfahren gemäß Anspruch 1, wobei das Verfahren den zusätzlichen Schritt, folgend auf das Aussetzen, des Lagerns des Erzeugnisses für 2 Wochen oder länger bei einer Temperatur von -1,5 °C bis 4 °C beinhaltet.

6. Verfahren gemäß Anspruch 1, wobei das Erzeugnis eine oder mehrere Birnen beinhaltet.

7. Verfahren gemäß Anspruch 6, wobei die eine oder die mehreren Birnen bei einer Härte, wie gemessen durch ein gewerbliches Penetrometer, mit einer Sondierung von 8 mm Durchmesser von 5 bis 9 Kilopond gemessen, geerntet werden.

8. Verfahren gemäß Anspruch 6, wobei die eine oder die mehreren Birnen ausgewählt sind aus Konferenzbirnen, Williams-/Bartlett-Birnen und Packam's-Birnen.

9. Verfahren gemäß Anspruch 6, wobei das Verfahren den zusätzlichen Schritt, folgend auf das Aussetzen, des Lagerns des Erzeugnisses bei einer Temperatur von -1,0 °C bis 0,5 °C beinhaltet.

10. Verfahren gemäß Anspruch 9, wobei das Lagern bei einer relativen Feuchtigkeit von zwischen 80 % und 98 % durchgeführt wird.

11. Verfahren gemäß Anspruch 1, wobei der Umfang an Cyclopropenzeit, die der Zeitraum ist, während dem das Erzeugnis Atmosphäre ausgesetzt wird, die Methylencyclopropen enthält, während dem die Atmosphäre, der das Erzeugnis ausgesetzt wird, ebenfalls 90 % oder mehr Ethylen enthält, bezogen auf die Cyclopropenzeit, und der Umfang der Ethylenzeit, die der Zeitraum ist, während dem das Erzeugnis Atmosphäre ausgesetzt wird, die Ethylen enthält, während dem die Atmosphäre, der das Erzeugnis ausgesetzt wird, ebenfalls Mehylencyclopropen enthält, 90 % oder mehr ist, bezogen auf die Ethylenzeit.

## Revendications

1. Une méthode de traitement d'un produit récolté pour le développement de caractéristiques souhaitables pour la consommation, ladite méthode comprenant l'étape consistant à exposer ledit produit à une atmosphère contenant
(i) de 100 ppb à 5 000 ppb en volume d'un composé cyclopropène, et
(ii) de l'éthylène exogène,
dans laquelle le rapport de la concentration d'éthylène en volume à la concentration de cyclopropène en volume va de 0,1/1 à 8/1,
dans laquelle ledit produit comprend une poire ou plus, une papaye ou plus, un avocat ou plus, ou un mélange de ceux-ci, et
dans laquelle ledit composé cyclopropène est un composé ayant la formule 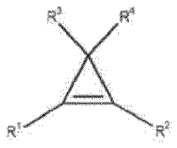 dans laquelle R¹ est le méthyle, et chaque élément parmi R², R³ et R⁴ sont l'hydrogène.

2. La méthode de la revendication 1, dans laquelle ladite exposition est effectuée à une température de -1,5 °C à 25 °C.

3. La méthode de la revendication 1, dans laquelle ladite exposition est effectuée à une température de -1,5 °C à 4 °C.

4. La méthode de la revendication 1, dans laquelle ladite exposition est effectuée à une température de 15 °C à 25 °C.

5. La méthode de la revendication 1, ladite méthode comprenant l'étape supplémentaire, subséquente à ladite exposition, consistant à stocker ledit produit pendant 2 semaines ou plus longtemps à une température de -1,5 °C à 4 °C.

6. La méthode de la revendication 1, dans laquelle ledit produit comprend une poire ou plus.

7. La méthode de la revendication 6, dans laquelle cette dite une poire ou plus est récoltée à une dureté telle que mesurée par un pénétromètre du commerce ayant une sonde de 8 mm de diamètre de 5 à 9 kilogrammes de force.

8. La méthode de la revendication 6, dans laquelle cette dite une poire ou plus est sélectionnée parmi des poires Conférence, des poires Williams/Bartlett, et des poires Packham.

9. La méthode de la revendication 6, ladite méthode comprenant l'étape supplémentaire, subséquente à ladite exposition, consistant à stocker ledit produit à une température de -1,0 °C à 0.5 °C.

10. La méthode de la revendication 9, dans laquelle ledit stockage est réalisé à une humidité relative comprise entre 80 % et 98 %.

11. La méthode de la revendication 1, dans laquelle l'étendue du temps de cyclopropène, à savoir la durée pendant laquelle ledit produit est exposé à une atmosphère qui contient du méthylènecyclopropène, durant laquelle l'atmosphère à laquelle ledit produit est exposé contient également de l'éthylène est de 90 % ou plus, rapporté au temps de cyclopropène, et
l'étendue du temps d'éthylène, à savoir la durée pendant laquelle ledit produit est exposé à une atmosphère qui contient de l'éthylène, durant laquelle l'atmosphère à laquelle ledit produit est exposé contient également du méthylènecyclopropène est de 90 % ou plus, rapporté au temps d'éthylène.
